# EUROPÄISCHE PATENTSCHRIFT

(11) **EP 0 523 516 B1**
(45) Veröffentlichungstag und Bekanntmachung des Hinweises auf die Patenterteilung: **10.01.1996**
(21) Anmeldenummer: 92111467.4
(22) Anmeldetag: 07.07.1992
(51) Int. Cl.: A47J 37/07, A47J 37/06

(54) **Grillvorrichtung**
Grilling device
Dispositif pour griller

(30) Priorität: 09.07.1991 DE 4122698
(43) Veröffentlichungstag der Anmeldung: 20.01.1993
(73) Patentinhaber: Rud.W. Oelkers MARKET IN GmbH, D-82340 Feldafing (DE)
(72) Erfinder: Oelkers, Rudolf W., W-8133 Feldafing (DE)
(74) Vertreter: von Hellfeld, Axel, Dr. Dipl.-Phys.

(56) Entgegenhaltungen:
- DE-A- 3 126 903
- DE-A- 3 320 677
- US-A- 3 122 134
- US-A- 3 220 335

## Beschreibung

Die Erfindung betrifft eine Grillvorrichtung mit einer im wesentlichen vertikal angeordneten Wärmequelle, die Wärme überwiegend quer zur vertikalen Richtung abstrahlt.

Bei herkömmlichen Grillvorrichtungen befinden sich die zu grillenden Speisen meist auf einem Rost oberhalb der häufig durch glühende Holzkohle gebildeten Wärmequelle. Seit längerer Zeit ist bekannt, daß von den Speisen abtropfende Säfte und Fette, die in die Glut fallen, dort zu schädlichen Substanzen wie beispielsweise Benzpyrenen verbrennen bzw. umgesetzt werden, die ihrerseits im gasförmigen Zustand nach oben steigen und sich an den Speisen festsetzen. Die kancerogene Wirkung solcher durch unvollständige Verbrennung entstehenden Produkte wird heutzutage nicht mehr ernsthaft bestritten, so daß herkömmliche Grillvorrichtungen in diesem Punkte verbesserungswürdig sind.

Zur Umgehung des geschilderten Problems ist vorgeschlagen worden, die Wärmequelle der Grillvorrichtung nicht waagerecht unterhalb des Grillgutes anzuordnen, sondern sie senkrecht zu stellen und das Grillgut auf einer Seite oder beiderseits neben der Wärmequelle anzuordnen. Eine solche Grillvorrichtung ist aus der DE-OS 31 26 903 bekannt. Die dort gezeigte Grillvorrichtung weist einen Bodenkasten auf, an dem zwei Seitenteile klappbar befestigt sind. Zwischen den beiden Seitenteilen ist zumindest ein Behälter zur Aufnahme von Holzkohle angeordnet, der sich quer zwischen den Seitenteilen erstreckt. In den Seitenteilen sind senkrecht nach unten weisende schlitzförmige Ausnehmungen vorgesehen, in die das Grillgut aufnehmende Grillkörbe eingehängt werden können.

Eine andere Grillvorrichtung mit im wesentlichen vertikal angeordneter Wärmequelle ist aus der DE-OS 33 20 677 bekannt. Die dort beschriebene Grillvorrichtung weist ein Gestell auf, in das zwei sich gegenüberliegende und parallel zueinander angeordnete Behälter zur Aufnahme von Holzkohle eingehängt sind. Zwischen diesen beiden Behältern ist ein das Grillgut enthaltender Grillkorb angeordnet, so daß das Grillgut von beiden Seiten mit Wärme bestrahlt wird und nicht gewendet zu werden braucht.

Bei derartigen Grillvorrichtungen kann vom Grillgut herabtropfendes Fett nicht mehr in die Glut gelangen, so daß die Entstehung gesundheitsschädlicher Stoffe vermieden ist. Es wurde jedoch festgestellt, daß Speisen, die sich oben im Grillkorb befinden, schneller fertig grillen als die Speisen, die sich im Grillkorb weiter unten befinden. Das ist allgemein unerwünscht, da das Grillgut möglichst zur gleichen Zeit eßfertig sein soll. Das Problem läßt sich auch nicht dadurch umgehen, daß der Grillkorb um 180° gedreht wieder in die Grillvorrichtung eingehängt wird. Es wäre nur möglich, den Grillkorb zu öffnen und die durchgegarteren Speisen mit denen zu vertauschen, die noch nicht so weit durchgegart sind. Dieses Vorgehen ist jedoch wegen des heißen und fettigen Grillkorbs aufwendig und daher unpraktisch.

Aus der US-A-3 122 134 ist ein multifunktionaler Backofen bekannt, der am Boden seines Herdraums zwei schwenkbare plattenförmige Teile aufweist. Zum Grillen werden diese beiden plattenförmigen Teile in eine im wesentlichen vertikale Stellung geschwenkt und von einem Gasbrenner beheizt, dessen Flammen auf freiliegende untere Stirnflächen der plattenförmigen Teile treffen. Die so aufgeheizten plattenförmigen Teile strahlen Wärme im wesentlichen nach innen und nach oben in Richtung auf einen zwischen ihnen angeordneten Behälter für Grillgut ab. Zwischen dem oberen Rand jedes plattenförmigen Teils und dem Behälter für das Grillgut ist je ein Metallschild angebracht, das die Aufgabe hat, die Wärme möglichst wenig nach oben entweichen zu lassen und stattdessen auf das im Grillgutbehälter befindliche Grillgut zu lenken.

Der Erfindung liegt die Aufgabe zugrunde, eine Grillvorrichtung mit im wesentlichen vertikal angeordneter Wärmequelle dahingehend zu verbessern, daß das zu grillende Gut im wesentlichen gleichzeitig gar ist. Ferner soll die Grillvorrichtung kostengünstig herzustellen und einfach zu handhaben sein.

Diese Aufgabe ist erfindungsgemäß durch Grillvorrichtungen gelöst, wie sie in den unabhängigen Ansprüchen 1, 6 und 7 angegeben sind.

Der Erfindung liegt die Erkenntnis zugrunde, daß der das Grillgut erreichende Wärmestrom über die Höhe gesehen bei herkömmlichen Grillvorrichtungen mit im wesentlichen vertikal angeordneter Wärmequelle ungleichmäßig ist. Der Grund hierfür wird darin gesehen, daß die Wärmeabstrahlung in Richtung auf das Grillgut pro Flächeneinheit bei den herkömmlichen Grillvorrichtungen im wesentlichen gleich ist. Das führt dazu, daß auf das Grillgut im oberen Bereich eines Grillkorbs sowohl die Strahlungswärme aus dem diesem Bereich gegenüberliegenden Bereich der Wärmequelle als auch die aus den unteren Bereichen der vertikal angeordneten Wärmequelle stammende und nach oben steigende Wärme einwirkt. Die sich im oberen Bereich des Grillkorbs befindenden Speisen werden somit früher gar als die Speisen im unteren Bereich des Grillkorbs. Durch die erfindungsgemäß zumindest über den größeren Teil der Vertikalerstreckung des die Wärmequelle aufnehmenden Behälters von unten nach oben abnehmende Wärmeabstrahlung pro Flächeneinheit wird eine wesentlich homogenere Wärmeverteilung als Funktion der Höhe erreicht. Bevorzugt macht der größere Teil mindestens 70 % der gesamten Vertikalerstreckung des Behälters aus.

In einer bevorzugten Ausführungsform der Grillvorrichtung für Holzkohle wird der Behälter über den größeren Teil der Vertikalerstreckung von oben nach unten breiter, vorzugsweise 2,5 mal so breit. Daraus ergibt sich, daß in dem geeignet ausgeführten Behälter im unteren Bereich pro Höheneinheit ein größeres Volumen an Holzkohle vorhanden ist als im oberen Bereich desselben. Die von der durchgeglühten Holzkohle abgegebene Wärmemenge ist somit im unteren Bereich des Behälters größer als im oberen Bereich, so daß die Wärmeabstrahlung pro Flächeneinheit zumindest über den größeren Teil der gesamten Vertikalerstreckung des Behälters von unten nach oben abnimmt. Die im oberen Bereich geringere Wärmeabstrahlung pro Flächeneinheit wird jedoch kompensiert durch die diesen Bereichen von unten verstärkt zuströmende Wärme. Die unteren Bereiche des Behälters, denen zusätzlich durch Konvektion herantransportierte Wärme fehlt, strahlen also pro Flächeneinheit mehr Wärme ab. Im Durchschnitt ist bei der erfindungsgemäßen Grillvorrichtung daher der auf das Grillgut einwirkende Wärmestrom in jeder Höhe im wesentlichen der gleiche, so daß bei nicht allzu unterschiedlicher Dicke des Grillguts dieses ungefähr gleichzeitig gar wird.

Ein weiterer Vorteil einer solchen Anordnung liegt darin, daß bei längerem Grillen Holzkohle, die von oben in den Behälter nachgefüllt wird, schneller durchglüht, da das Verhältnis von "frischer" Holzkohle zu bereits durchgeglühter Holzkohle kleiner ist als bei herkömmlichen Grillvorrichtungen mit vertikal angeordnetem Behälter.

In der Ausführungsform für Holzkohle kann der Behälter so ausgeführt sein, daß er kontinuierlich von oben nach unten breiter wird. In einer vorteilhaften Ausgestaltung wird der Behälter jedoch nur über den größeren Teil der Vertikalerstrekkung von oben nach unten breiter und über den verbleibenden kleineren Teil der Vertikalerstreckung nach unten wieder schmaler. Dabei macht der größere Teil mindestens 70 %, bevorzugt aber 80 bis 90 % der gesamten Vertikalerstreckung des Behälters auf. Durch den im unteren Bereich wieder schmaler werdenden Behälter, der bei Verwendung von Holzkohle üblicherweise ein Drahtgitterbehälter ist und zur Vermeidung allzu starker Wärmeabstrahlung nach unten einen geschlossenen Boden aufweist, ist gewährleistet, daß zu Asche verbrannte Holzkohle aus dem Behälter herausfallen kann und sich nicht auf dem geschlossenen Boden sammelt, wo sie den Verbrennungsvorgang behindern würde.

Die beschriebene Form des Behälters für eine Holzkohle-Grillvorrichtung kann bei stationären und bei portablen, meist zerleg- oder klappbaren Grillvorrichtungen zum Einsatz kommen. Weist die Grillvorrichtung Seitenteile auf, zwischen denen sich der Behälter erstreckt und in denen schlitzförmige Ausnehmungen zur Aufnahme des oder der Grillkörbe vorgesehen sind, sind diese schlitzförmigen Ausnehmungen bevorzugt so angeordnet, daß die Symmetrielängsachse jedes Schlitzes in einer Ebene liegt, die parallel zur der Ebene ist, die definiert wird durch den Teil der den Schlitzen zugekehrten Seite des Behälters, in dem der Behälter von oben nach unten breiter wird. Das bedeutet, daß die Schlitze schräg angeordnet sind und dieselbe Neigung aufweisen wie der größere Teil der ihnen zugewandten Seite des Behälters. Der oder die Grillkörbe und das in ihnen enthaltene Grillgut sind dann im wesentlichen parallel zu der Ebene angeordnet, die durch den größeren Teil der ihnen zugewandten wärmeabstrahlenden Fläche des Behälters definiert ist. Es hat sich herausgestellt, daß der Garvorgang der Speisen bei dieser Anordnung noch gleichmäßiger erfolgt.

Damit bei solchermaßen schräg stehenden Grillkörben kein vom Grillgut herabtropfendes Fett in den Behälter und somit in die Glut gelangen kann, ist der Abstand der Schlitze von dem Behälter in Abhängigkeit der Neigung und der Größe der Grillkörbe so gewählt, daß das Lot von der Oberkante eines in den Schlitzen der Seitenwände aufgenommenen Grillkorbs den Behälter nicht berührt. Bevorzugt beträgt der kleinste Abstand zwischen dem Lot und dem Behälter zumindest 2 cm. So ist weitgehend vermieden, daß durch Strömungseinflüsse abgelenkte kleine Tröpfchen, die aus dem Grillgut austreten, in die Glut gelangen.

Die Erfindung ist nicht auf Grillvorrichtungen mit Holzkohle als Wärmequelle beschränkt. Ebenso kann die Wärmequelle eine elektrisch betriebene Widerstandsheizung sein. Bei einer solchen Ausführungsform ist der Heizdraht der Widerstandsheizung von unten nach oben zunehmend weniger dicht verlegt. Wichtig ist, daß durch die Art der Verlegung die Abstrahlfläche im unteren Bereich des Behälters größer ist als im oberen Bereich. Bevorzugt nimmt die Abstrahlfläche der Widerstandsheizung von unten nach oben kontinuierlich ab. Dies läßt sich z.B. dadurch erreichen, daß der Heizdraht der Widerstandsheizung mäanderförmig verlegt ist und der Abstand der einzelnen Mäander voneinander nach oben hin zunimmt. Die Form der Verlegung des Heizdrahtes ist nicht von entscheidender Bedeutung und kann z.B. auch spiralförmig mit nach oben hin zunehmender Ganghöhe ausgeführt sein.

Alternativ zur Beheizung mit Holzkohle oder durch eine elektrische Widerstandsheizung kann die Wärmequelle auch durch einen Gasbrenner gebildet sein. Bei einer solchen mit Gas betriebenen Ausführungsform der Grillvorrichtung nimmt die Zahl der Gasflammenaustrittsöffnungen pro Flächeneinheit an wärmeabstrahlender Fläche von unten nach oben ab.

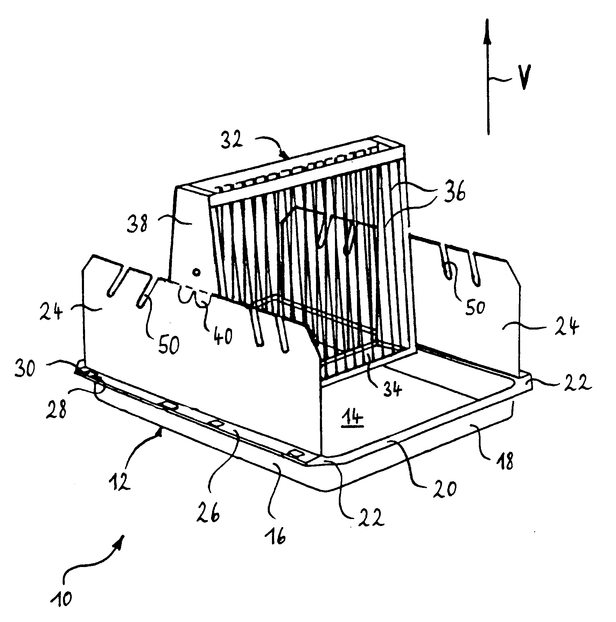

Eine vorteilhafte Ausgestaltung der Erfindung wird im folgenden anhand der Zeichnung näher erläutert.

Die einzige Figur zeigt eine Grillvorrichtung 10 mit einer Bodenwanne 12, die einen angenähert rechteckförmigen Boden 14 sowie darauf im wesentlichen senkrecht stehende lange und kurze Seitenwände 16, 18 aufweist, die mit dem Boden 14 einstückig verbunden sind. Die Ecken, an denen lange und kurze Seitenwände 16, 18 aufeinandertreffen, sind abgerundet ausgeführt.

Von den Seitenwänden 16, 18 ragt ein einstückig mit diesen verbundener umlaufender Rand 20 rechtwinklig nach außen hervor. Im Bereich von Ecken 22 ist der Rand 20 abgeschrägt. Die gesamte Bodenwanne 12 ist einstückig ausgeführt.

Auf die von den langen Seitenwänden 16 hervorragenden Abschnitte des Randes 20 sind Seitenteile 24 aufgeschoben. Hierfür weisen die Seitenteile 24 einen mehrfach rechtwinklig gebogenen Fuß 26 auf, der die genannten Abschnitte des Rands 20 umgreift. Auf der nach oben weisenden Fläche des Fußes 26 sind vier Aussparungen 28 vorhanden, in die auf den Abschnitten des Rands 20 ausgebildete Laschen 30 eingreifen. Die Seitenteile 24 sind durch die Aussparungen 28 und die Laschen 30 klemmend mit der Bodenwanne 12 verbunden.

Ein Behälter 32 für Holzkohle erstreckt sich quer zwischen den Seitenwänden 24. Der Behälter 32 ist oben offen und unten durch einen Behälterboden 34 verschlossen. Stäbe 36 zwischen dem Behälterboden 34 und dem oberen Rand des Behälters 32 auf den den kurzen Seitenwänden 18 zugewandten Seiten des Behälters sorgen dafür, daß in den Behälter 32 gefüllte und hier nicht gezeigte Holzkohle nicht herausfallen kann und die Hitze durchgeglühter Holzkohle gut abgestrahlt werden kann. An Behälterseitenwänden 38 sind Laschen 40 ausgebildet, mit denen der Behälter 32 klemmend auf die Seitenteile 24 gesteckt ist.

Ein Pfeil V bezeichnet die Richtung der Vertikalen bezogen auf den Erdmittelpunkt. Wie aus der Figur zu ersehen, nimmt die Breite des Behälters 32, also die Erstreckung parallel zu den langen Seitenwänden 16, von oben nach unten kontinuierlich zu. Die den kurzen Seitenwänden 18 zugewandten Flächen des Behälters 32, durch die die überwiegende Wärmeabstrahlung stattfindet, sind also bezüglich der Vertikalen V schräg gestellt.

Die gleiche Schrägstellung bzw. Neigung bezüglich der Vertikalen V weisen sich paarweise gegenüberliegende Schlitze 50 auf, die in den Seitenteilen 24 ausgespart sind. Die Schlitze 50 dienen zur Aufnahme eines oder mehrerer nicht gezeigter Grillkörbe. Durch die Schrägstellung der Schlitze 50 erstreckt sich ein in ihnen aufgenommener Grillkorb im wesentlichen parallel zu der ihm zugewandten und mit Stäben 36 versehenen Behälterseite.

## Patentansprüche

1. Grillvorrichtung mit einer im wesentlichen vertikal angeordneten Wärmequelle, die Wärme überwiegend quer zur vertikalen Richtung (V) abstrahlt,
dadurch **gekennzeichnet,** daß die Wärmequelle glühende Holzkohle ist und ein die Holzkohle enthaltender Behälter (32) zumindest über den größeren Teil der Vertikalerstreckung von oben nach unten breiter wird, so daß die Wärmeabstrahlung pro Flächeneinheit zumindest über den größeren Teil der Vertikalerstreckung des Behälters (32) von unten nach oben abnimmt.

2. Grillvorrichtung nach Anspruch 1,
dadurch **gekennzeichnet,** daß der größere Teil zumindest 70 % der gesamten Vertikalerstreckung des Behälters (32) ausmacht.

3. Grillvorrichtung nach Anspruch 1 oder 2,
dadurch **gekennzeichnet,** daß der größere Teil etwa 80 % der gesamten Vertikalerstreckung des Behälters (32) ausmacht.

4. Grillvorrichtung nach einem der Ansprüche 1 bis 3,
dadurch **gekennzeichnet,** daß der Behälter (32) sich von oben nach unten auf etwa das 2,5-fache verbreitert.

5. Grillvorrichtung nach einem der Ansprüche 1 bis 4,
dadurch **gekennzeichnet,** daß der Behälter (32) über den kleineren Teil der Vertikalerstreckung von oben nach unten schmaler wird.

6. Grillvorrichtung mit einem im wesentlichen vertikal angeordneten Behälter (32), aus dem eine Wärmequelle überwiegend quer zur vertikalen Richtung (V) Wärme abstrahlt,
dadurch **gekennzeichnet,** daß die Wärmequelle eine elektrisch betriebene Widerstandsheizung ist, deren Heizdraht von unten nach oben zunehmend weniger dicht verlegt ist, so daß die Wärmeabstrahlung pro Flächeneinheit zumindest über den größeren Teil der Vertikalerstreckung der Wärmequelle von unten nach oben abnimmt.

7. Grillvorrichtung mit einem im wesentlichen vertikal angeordneten Behälter (32), aus dem eine Wärmequelle überwiegend quer zur vertikalen Richtung (V) Wärme abstrahlt,
dadurch **gekennzeichnet,** daß die Wärmequelle ein Gasbrenner mit einer Anzahl Austrittsöffnungen ist, wobei die Zahl der Austrittsöffnungen pro Flächeneinheit von unten nach oben abnimmt, so daß die Wärmeabstrahlung pro Flächeneinheit zumindest über den größeren Teil der Vertikalerstreckung der Wärmequelle von unten nach oben abnimmt.

8. Grillvorrichtung nach einem der vorhergehenden Ansprüche,
dadurch **gekennzeichnet,** daß die Wärmequelle bezüglich ihrer Längserstreckung im wesentlichen rechtwinklig zwischen zwei Seitenteilen (24) angeordnet ist, wobei mehrere, sich jeweils paarweise in den Seitenteilen (24) gegenüberliegende Schlitze (50) zur Aufnahme von Grillkörben vorhanden sind und die Symmetrielängsachse jedes Schlitzes (50) in einer Ebene liegt, die parallel zur Ebene des bezüglich der Vertikalerstreckung größeren Teils der den Schlitzen (50) zugekehrten Seite des Behälters (32) ist.

9. Grillvorrichtung nach Anspruch 6,
dadurch **gekennzeichnet,** daß das Lot von der Oberkante eines in den Schlitzen (50) der Seitenwände aufgenommenen Grillkorbs die Wärmequelle nicht berührt.

10. Grillvorrichtung nach Anspruch 7,
dadurch **gekennzeichnet,** daß der kleinste Abstand zwischen dem Lot und der Wärmequelle zumindest 2 cm beträgt.

## Claims

1. A barbecue device, comprising a heat source which is disposed substantially vertically and from which the heat radiates substantially transversely of the vertical direction (V),
**characterized** in that the heat source is glowing charcoal and a container (32) containing the charcoal becomes wider from top to bottom, at least over the major part of the vertical extension, such that the radiation of heat per surface area unit decreases from the bottom to the top, at least over the major part of the vertical extension of the container (32).

2. The barbecue device as claimed in claim 1,
**characterized** in that the major part accounts for at least 70% of the total vertical extension of the container (32).

3. The barbecue device as claimed in claim 1 or 2,
**characterized** in that the major part accounts for approximately 80% of the total vertical extension of the container (32).

4. The barbecue device as claimed in any of claims 1 to 3,
**characterized** in that the container (32) increases in width from top to bottom to approximately 2.5 times the width at the top.

5. The barbecue device as claimed in any one of claims 1 to 4,
**characterized** in that the container (32) becomes narrower from top to bottom over the minor part of the vertical extension.

6. The barbecue device having a substantially vertically arranged container (32) from which a heat source radiates heat substantially transversely to the vertical direction (V),
**characterized** in that the heat source is an electrically operated resistance heater, the heating wire of which is progressively less densely laid from the bottom to the top, such that the heat radiation per surface area unit decreases from the bottom to the top, at least over the major part of the vertical extension of the heat source.

7. The barbecue device having a substantially vertically arranged container (32) from which a heat source radiates heat substantially transversely to the vertical direction (V),
**characterized** in that the heat source is a gas burner having a number of outlet openings, this number of outlet openings per surface area unit decreasing from the bottom to the top, such that the heat radiation per surface area unit decreases from the bottom to the top, at least over the major part of the vertical extension of the heat source.

8. The barbecue device as claimed in any one of the preceding claims,
**characterized** in that the heat source is arranged between two side members (24) substantially at right angles with regard to its own longitudinal extension, wherein a plurality of slots (50) disposed in opposed pairs in the side members (24) serve to take up barbecue baskets and the longitudinal axis of symmetry of each slot (50) lies in a plane which is parallel to the plane of the major part, with regard to the vertical extension, of that side of the container (32) which faces the slots (50).

9. The barbecue device as claimed in claim 6,
**characterized** in that the perpendicular from the top edge of a barbecue basket received in the slots (50) of the sidewalls does not touch the heat source.

10. The barbecue device as claimed in claim 7,
**characterized** in that the smallest distance bwetween the perpendicular and the heat source is at least 2 centimeters.

## Revendications

1. Dispositif pour griller pourvu d'une source de chaleur disposée sensiblement verticalement qui rayonne de la chaleur principalement perpendiculairement à la direction verticale (V),
caractérisé en ce que la source de chaleur est formée de charbon de bois ardent et un récipient (32) contenant le charbon de bois va en s'élargissant du haut vers le bas au moins sur la plus grande partie de sa hauteur, de telle sorte que le rayonnement calorifique par unite de surface décroisse du bas vers le haut sur au moins la plus grande partie de la hauteur du récipient (32).

2. Dispositif pour griller selon la revendication 1,
caractérisé en ce que la plus grande partie constitue au moins 70 % de la hauteur totale du récipient (32).

3. Dispositif pour griller selon la revendication 1 ou 2,
caractérisé en ce que la plus grande partie constitue au moins 80 % de la hauteur totale du récipient (32).

4. Dispositif pour griller selon l'une quelconque des revendications 1 à 3,
caractérisé en ce que le récipient (32) s'élargit du haut vers le bas d'un facteur d'environ 2,5.

5. Dispositif pour griller selon l'une quelconque des revendications 1 à 4,
caractérisé en ce que le récipient (32) s'amincit du haut vers le bas sur la plus petite partie de la hauteur.

6. Dispositif pour griller pourvu d'un récipient (32) disposé sensiblement verticalement d'où une source de chaleur rayonne de la chaleur principalement perpendiculairement à la direction verticale (V),
caractérisé en ce que la source de chaleur est une résistance chauffante alimentée électriquement dont le filament de chauffage est disposé de façon de moins en moins dense du bas vers le haut, de telle sorte que le rayonnement calorifique par unité de surface décroisse du bas vers le haut sur au moins la plus grande partie de la hauteur de la source de chaleur (32).

7. Dispositif pour griller pourvu d'un récipient (32) disposé sensiblement verticalement d'où une source de chaleur rayonne de la chaleur principalement perpendiculairement à la direction verticale (V),
caractérisé en ce que la source de chaleur est un brûleur à gaz pourvu d'un certain nombre d'ouvertures de sortie, dans lequel le nombre d'ouvertures de sortie par unité de surface diminue du bas vers le haut, de telle sorte que le rayonnement calorifique par unité de surface décroisse du bas vers le haut sur au moins la plus grande partie de la hauteur de la source de chaleur (32).

8. Dispositif pour griller selon l'une quelconque des revendications précédentes,
caractérisé en ce que la source de chaleur est disposée suivant sa longueur sensiblement perpendiculairement entre deux parties latérales (24), plusieurs fentes (50) étant formées par paires opposées dans les parties latérales (24) pour recevoir des paniers de gril, l'axe de symétrie longitudinal de chaque fente (50) se trouvant dans un plan qui est parallèle au plan de la plus grande partie de la hauteur du côté tourné vers les fentes (50) du récipient (32).

9. Dispositif pour griller selon la revendication 6,
caractérisé en ce que la verticale issue de l'arête supérieure d'un panier de gril reçu dans les fentes (50) des parois latérales ne touche pas la source de chaleur.

10. Dispositif pour griller selon la revendication 7,
caractérisé en ce que l'espacement minimum entre la verticale et la source de chaleur s'élève à au moins 2 cm.
